# EUROPEAN PATENT APPLICATION

(11) **EP 2 543 601 A1**
(43) Date of publication of application: **09.01.2013**
(21) Application number: 12185258.6
(22) Date of filing: 31.01.2011
(51) Int. Cl.: B64F 1/00, B64F 5/00, B64D 41/00

(54) **Aircraft maintenance unit**

(30) Priority: 02.02.2010 US 698561
(62) Divisional of application: 11713901.4
(71) Applicant: Pratt&Whitney Line Maintenance Services Inc., East Hartford, Connecticut 06118 (US)
(72) Inventor: The designation of the inventor has not yet been filed
(74) Representative: Tomlinson, Kerry John

(57) **Abstract**

The disclosure relates to a maintenance unit for servicing aircraft during stand-still, comprising electrically powered service and/or maintenance equipment. There is a power input for connecting the unit to an electrical power supply operating at 200/115VAC at 400 Hz. The unit further comprises a transformer and conversion unit (TCU) for transforming the 200/115 VAC/400 Hz power to standard grid voltage at 400/230VAC at 50 Hz and at least one frequency converter enabling variable frequency of the output voltage, for powering said service and/or maintenance equipment. The maintenance equipment may be a gas turbine engine washing equipment and comprises a water delivery member for supplying water from a water source, a high pressure pump coupled to the water providing means for providing pressurized water, and a high pressure water outlet.

## Description

### Technical Field

The present disclosure relates to maintenance of aircraft engines, and in particular to means for powering the equipment for such maintenance.

### Background

Maintenance of aircraft very often is performed during the period between landing and take-off, i.e. at the gates where the aircraft is "parked". The equipment used therefore must be mobile, and often times specialized carts, trucks or the like are used for carrying the equipment.

The electric power needed for driving the vehicle as well as for operating the maintenance equipment is often provided either by dedicated diesel engine driven generators supplying the standard three phase electrical power at 50/60Hz, or by connecting to stationary power in the airport. The latter may require either long cables, or at least sockets provided at the gates or elsewhere, possibly in the ground, which adds to the complexity of the infra structure for the power system.

During flight an aircraft generates its own power by using so called APU's (Auxiliary Power Units) mounted inside the aircraft body. An APU is a gas turbine engine, and these APUs can also provide the power for internal use during stop. However, since it is instrumental in aircraft technology to reduce weight, normally the APU:s are equipped with generators delivering power at 400 Hz. Electrical equipment operating at this frequency can be made smaller and more compact, and thus, occupies less space and has a lower weight.

A big disadvantage with such equipment is that it is much more expensive.

In airports so called "Point-of-use solid-state frequency inverters" (SSFIs) are installed as a permanent part of the facility power distribution and wiring system, The facility power system provides the input to the SSFI where it is rectified to direct current (DC), and through oscillator-referenced solid-state switching components, inverted into a new frequency, namely 400 Hz. A flexible, special-purpose power cable attached to the aircraft power distribution system feeds this 400-Hz power to the aircraft using a unique plug-and-socket arrangement.

As an alternative to the above there can be stationary or mobile diesel powered generators for providing the desired power.

This power has to this date not been used for other purposes than for powering the aircraft internal systems.

### Summary

In view of the above discussion of the prior art, and in order to provide more easily operated maintenance equipment for aircraft during stand-still, it would be desirable to be able to refrain from using dedicated diesel powered generators which may have to be transported together with the maintenance equipment to the point of use, or to be able to eliminate the complex cabling systems needed for providing electrical power directly from the power distribution and wiring system at the airport, and instead to make use of the power from the SSFI facilities or from the stationary diesel power systems.

Therefore, the present disclosure sets out to provide an apparatus that achieves the above objectives, and an example of such an apparatus is defined in claim 1.
An aircraft maintenance and/or servicing unit to enable servicing aircraft during stand-still according to one example thus comprises electrically powered service and/or maintenance equipment. It is provided with a power input connectable to a electrical power supply operating at 200/115VAC and 400Hz. A transformer and conversion unit is provided to transform/convert the 200/115 VAC/400 Hz power to three-phase voltage 400/230VAC at selected frequency for powering said service and/or maintenance equipment. Preferably the frequency is variable between 2-50 Hz.

In a further aspect an aircraft comprising an auxiliary power unit (APU) delivering electric power at 200/115VAC/400Hz is provided with a power output connection accessible from the outside of the aircraft.

The maintenance unit according to one example can be connected to the aircraft, thereby eliminating the need of auxiliary ground power units.

### Brief Description of the Drawings

Further scope of applicability of the present disclosure will become apparent from the detailed description given hereinafter and the accompanying drawings which are given by way of illustration only, and thus not to be considered limiting on the present disclosure, and wherein

Fig. 1 is a schematic illustration of a unit according to one example;

Fig. 2 is a schematic illustration of the electric components in the unit;

Fig. 3a shows an exemplary implemention in a wash unit seen from one side with the cover removed;

Fig. 3b shows the same unit as in Fig. 3a seen from the opposite side;

Fig. 4 schematically shows the components of the unit; and

Fig. 5 illustrates a unit according to a further illustrative embodiment.

### Detailed Description

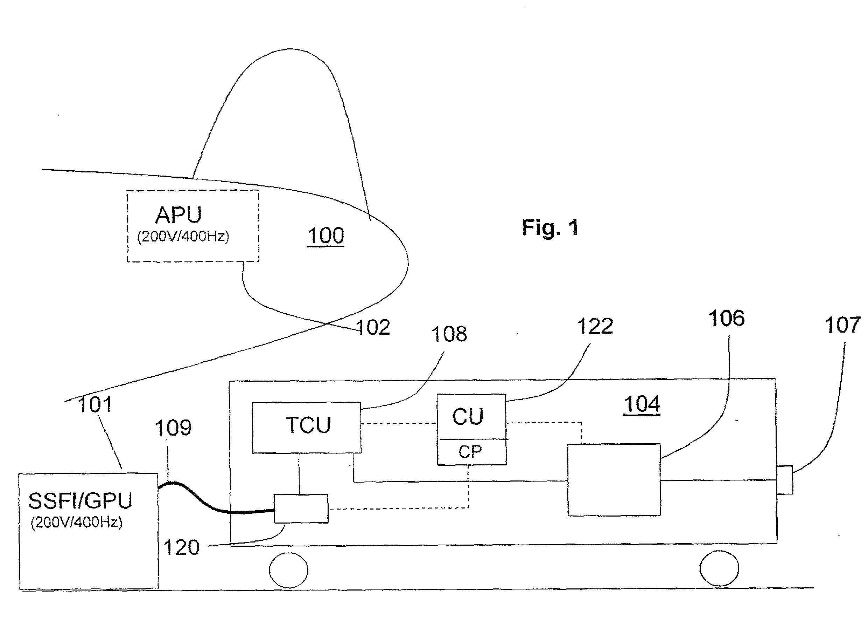

In Fig. 1 there is shown schematically a unit according to one example.

The rear of a parked aircraft 100 is schematically shown in stand-by for service and/or maintenance.

A so called Ground Power Unit (GPU) or an SSFI (solid-state frequency inverter) 101 is provided on the ground at a service point for the aircraft or at a gate. This unit typically delivers about 90 kVA of electric power at 200/115VAC/400Hz, and is used for powering the internal systems of the aircraft if the internal Auxiliary Power Unit (APU) is not in use or is inoperable or if it for some reason or another does not deliver enough power.

The maintenance/service equipment on the vehicle, such as a cart is connected to the power unit 101 via a cable 109 to an electrical input 120. The connection can be by means of a plug and socket type connector (not shown), known from prior art systems.

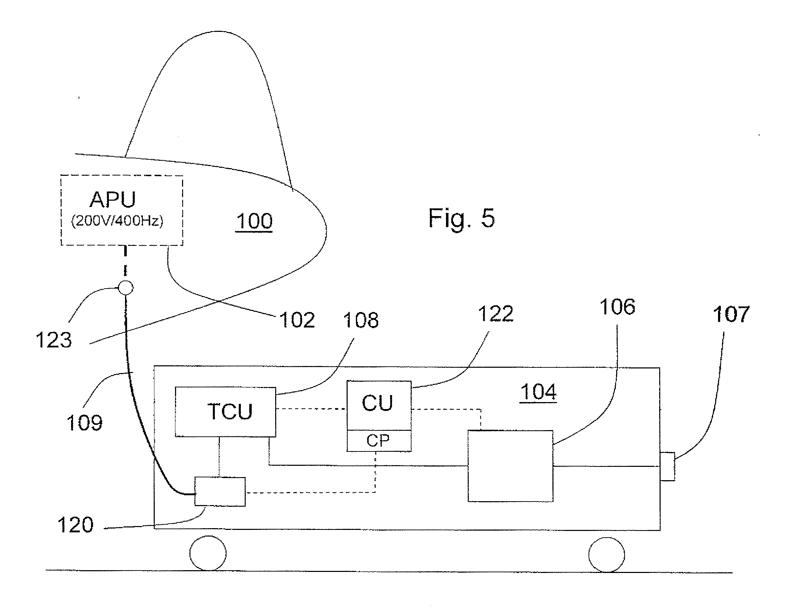

In the system shown in Figs. 1 and 5 the electric components (motors, pumps etc.) are designed for standard power and therefore the power from the GPU/SSFI needs to be converted/transformed. Thus, in accordance with one example, there is provided a transformer and conversion unit 108, schematically illustrated in Figs. 1 and 5 by a box labelled TCU.

The control of the operation of the unit can be implemented in many ways; in the embodiment shown a general control unit (CU) 122 is indicated, and operation is managed via a control panel CP associated with the control unit. This control unit can comprise any conventional control means such as relay technology, ASICs, FPGA, programmable micro-controllers and micro-processors etc.

Furthermore, in Fig. 1 a mobile vehicle, such as a cart 104 is shown, equipped with some kind of operation equipment 106, i.e. maintenance and/or service equipment, a typical example of which would be washing units or de-icing units. Other types of equipment or apparatus for service and/or maintenance are possible. The output 107 from the operation equipment 106 can be a supply of high pressure water for washing purposes, or pressurized de-icing liquid (glycol). Other maintenance equipment is equally suitable.

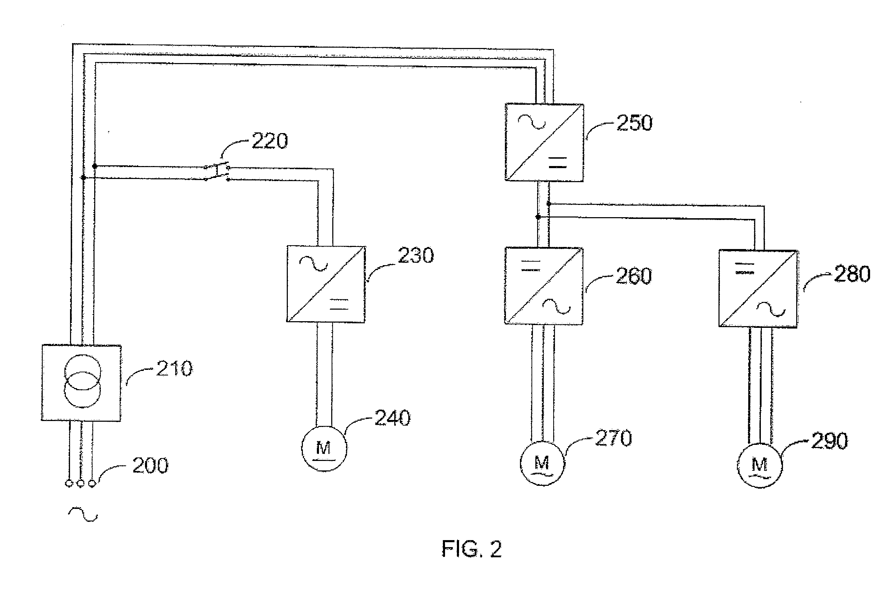

Now the design of the transformer unit will be described with reference to Fig. 2.

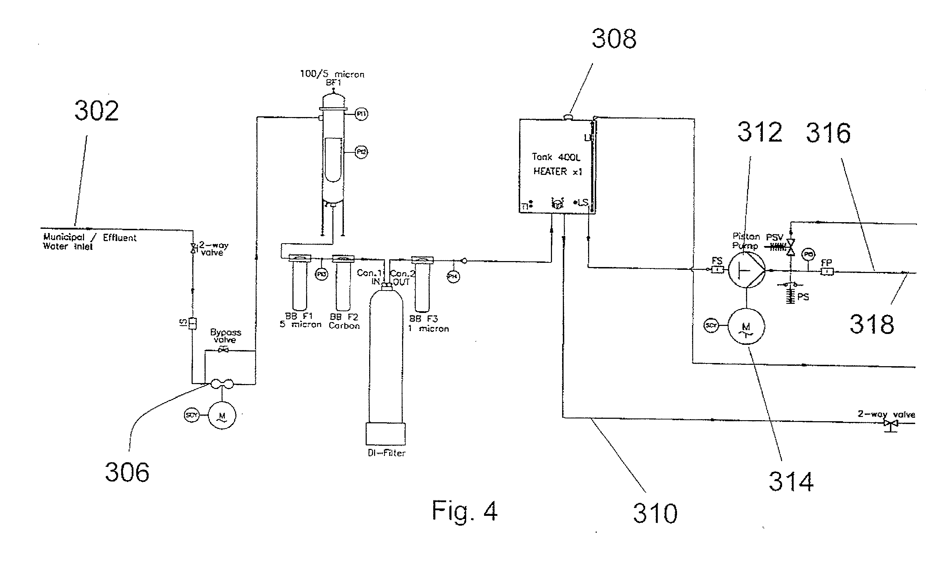

In Fig. 2 there is illustrated an electrical system of an exemplary embodiment, for providing controlled voltage and current to, amongst other things, an electric motor 270 driving a high pressure pump and an electric motor 290 driving a water treater pump, shown in Fig. 4, (none of the pumps are shown in Fig. 2).

By controlled voltage and current in present description is meant voltage and current having physical properties such that, when supplied to the electric motors 270, 290, correct rotation speed of the electric motors 270, 290 and pumps will be achieved.

The pumps (not illustrated) are actuated by electric drives, typically comprising suitable power supply circuits, electric motors 270, 290 and control units (not illustrated) suitable for controlling and/or adjusting the properties of voltage and current. In one embodiment this is achieved by an alternating-current (AC) to alternating-current (AC) conversion system (AC/AC) and three-phase induction motors, 270, 290.

The electric power is supplied to the electrical motors 270, 290, from an alternating-current network 200 such as a three-phase network or the like, via an AC to AC conversion system (AC/AC). In one embodiment, the alternating-current (AC) network 200 is represented by an electrical network, typical for commercial aircraft and aircraft 'parking spaces' at airports, having a voltage level of 200/115 Volt AC, 400Hz. The voltage, 200/115VAC/400Hz, from the alternating-current (AC) network 200 is transformed, by a transformer 210, to increase the voltage level from 200/115VAC to 400/230VAC (still having a frequency of 400Hz). This since conventional alternating-current (AC) motors 270, 290 (typically three-phase induction motors which are frequently used in pump systems) normally require a voltage of 400/230VAC to function properly.

An induction motor 270, 290, driving a pump, requires a control unit suitable for controlling and/or adjusting the rotation speed of said induction motor 270, 290. Controlled rotation speed may be achieved by an inverter 260, 280 (or a frequency converter). Said frequency converter/inverter 260, 280 may convert direct-current (DC), or alternating-current (AC) with an unsuitable frequency, to a voltage having a suitable voltage level and suitable frequency properties, i.e. nominal 400/230VAC, 50Hz; however a change in frequency will also result in a change of rotation speed of motors 270, 290 and pumps. This is in fact used for controlling the pumping rate of the pumps.

Thus, after the transformation to 400/230VAC, 400Hz, the alternating-current (AC) is distributed and converted into direct-current (DC), in an alternating-current (AC) to direct-current (DC) converter/inverter (AC/DC) 250. The direct-current (DC) may then be further distributed to frequency converters 260, 280 which may comprise control units (not illustrated). The control units being able to control the frequency converters 260, 280 to produce an alternating-current (AC) with a voltage of 400/230VAC and a frequency such that, when supplied to the induction motors 270, 290, correct rotation speed of the electric motors 270, 290 and pumps will be achieved.

The electrical system may further comprise one or several security devices 220, typically fuses, automatic fuses or circuit breakers for protecting the circuitry from overload or overheating. Also provided in an embodiment is a further alternating-current to direct-current converter (AC/DC) for driving a fan motor 240, suitable for cooling a cabinet which may house the electronic circuitry.

As already indicated, the operation of the unit can be controlled by conventional control means such as relay technology, ASICs, FPGA, programmable micro-controllers and micro-processors etc.

In one embodiment a Control Unit (CU) 122, which is one option provided for controlling the operation, is used. Such a control unit can include a suitably programmed microprocessor.

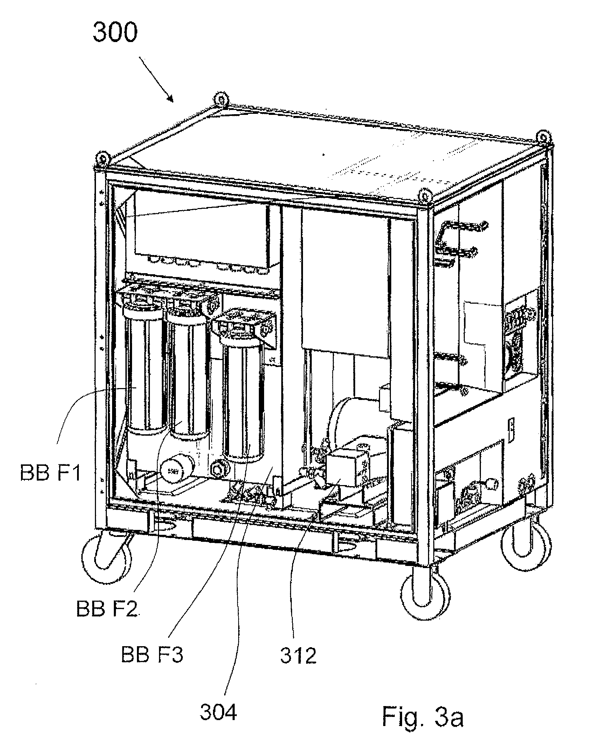

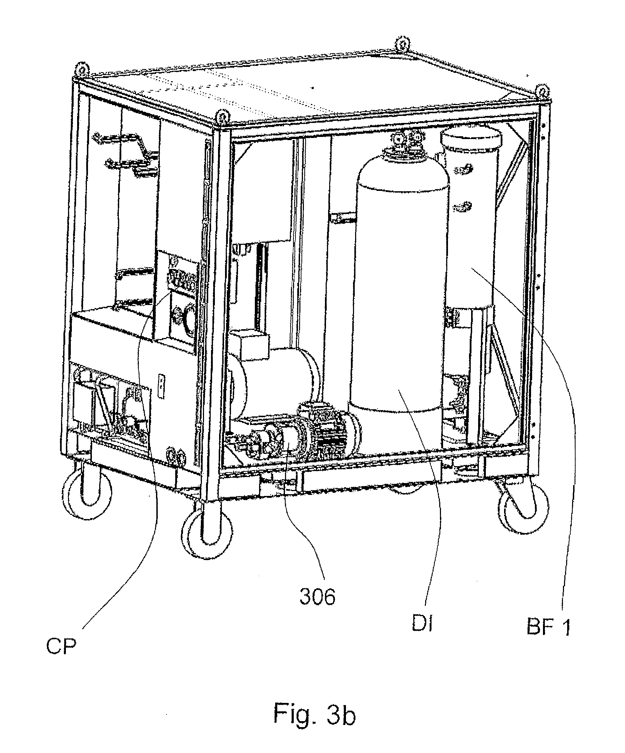

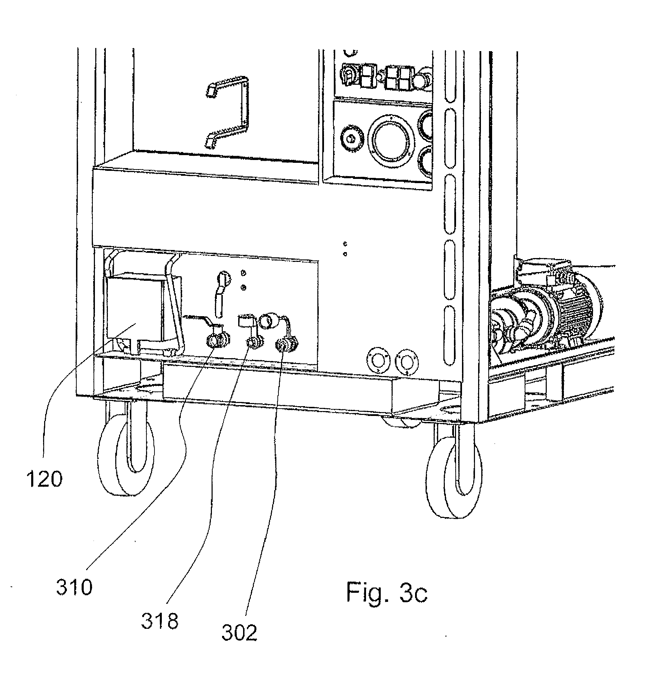

Now the disclosure will be described in further detail with reference to Figs. 3a and b showing an exemplary embodiment, namely a wash unit 300 for washing gas turbines on aircraft, and Fig. 4 which is a schematic illustration of the apparatus.

Thus, Fig. 3a shows one side of the unit with the cover removed, and Fig. 3b shows the opposite side, like-wise with the cover removed.

The unit is provided with water inlet connections 302 for connecting to e.g. municipal water. However, one can also connect to a tank or other storage means for water that has been collected during the washing operation and which thus can be recirculated.

The water is fed to a tank 304 in the unit from which water subsequently is taken for washing. If collected waste water from the washing operation is to be used, a pump 306 has to be used. However, if municipal water that is supplied under pressure is used, the tank 304 can be filled without need of a pump, in which case a by-pass valve is opened to by-pass the pump.

The pump 306 P1 is suitably an electrically driven gear pump, but any pump would do. The pumping rate of the pump is controlled by varying the frequency of the output voltage from a frequency converter 260 (Fig. 2) dedicated for that pump.

Before entering the tank the water is filtered in a filter system, which may comprise one or a plurality of filters. In the shown embodiment a number of filters are used, namely a first 5 micron bag filter B F1 for removing oil and particles. Then the water is passed through a second filter BB F1, which also removes particles, and a third filter BB F2 containing granulated activated carbon which removers i.e. chlorine from the water.

Then the water is de-ionized in a DI (de-ionization) filter to reduce the ion concentration to a desired level. The water is finally passed through a 1 micron filter BB F3 for eliminating any possible contaminants from the DI filter.

The tank 304 in the shown embodiment has a capacity of 400 litres but the size can of course vary and be tailored to local needs. The tank has a ventilation means 308 at the top for pressure equalization during filling and emptying, and can also function as an overflow. There is also provided a bottom drain 310 for enabling emptying of the tank

A high pressure pump 312, e.g. a piston pump, is coupled to an outlet from the tank via suitable tubing. The pump is driven by an electric motor 314 powered by the transformer and frequency converter unit. Pressurized water from the pump is fed via a high pressure tubing 316 to a pressure outlet 318. External washing equipment using high pressure water can be connected to this outlet by means of suitable couplings. Again, the pump is controlled by varying the frequency of the frequency converter dedicated for this pump, and can be varied such that the pump delivers pressures in the interval 60-80 bar.

A pressure safety valve PSV is provided between the pump and the pressure outlet for preventing too high pressures to build up in the tubing.

Suitable washing equipment that can be used together with the unit according the disclosure is set forth in several of applicants own patents such as US-7,497,220, US-7,297,260, EP 1 755 952, which are hereby incorporated by reference in their entirety.

As disclosed above the maintenance unit is connected to power generating units on the ground, i.e. GPUs, SSFIs etc, but it is also within the scope of the disclosure to use power generated by an aircraft itself, i.e. energy provided by the APU inside the aircraft. However, this requires means for connecting the unit to the APU output. This is schematically shown in Fig. 5, which corresponds to the embodiment in Fig. 1, but with the difference that the power for the unit is taken from the APU in the aircraft 100, and fed via the cable 109. Otherwise the embodiment comprises the same components as the embodiment in Fig. 1, and will not be described further.

In view of this possibility, in still another aspect of and in accordance with the disclosure an aircraft is provided with a power output from the internal APU which is accessible from the outside of the aircraft. This power output may be provided in the form of e.g. a plug-and-socket type of coupling provided in the body of the aircraft, schematically shown at 123 and suitably protected by a removable cover plate to render it accessible.

The foregoing examples are provided merely for the purpose of explanation and are in no way to be construed as limiting. While reference to various embodiments are shown, the words used herein are words of description and illustration, rather than words of limitation. Further, although reference to particular means, materials, and embodiments are shown, there is no limitation to the particulars disclosed herein. Rather, the embodiments extend to all functionally equivalent structures, methods, and uses, such as are within the scope of the appended claims.

The following clauses set out features of the invention which may not presently be claimed, but which may form the basis for future amendment or a divisional application.
1. An aircraft maintenance and/or servicing unit, comprising: electrically powered equipment; a power input adapted to be connected to an electrical power supply operating at 200/115VAC and 400 Hz; a transformer and conversion unit (TCU) adapted to transform the 200/115 VAC/400 Hz power to standard voltage of 400/230VAC/ at selected frequency and to deliver power to said equipment.
2. An aircraft maintenance and/or servicing unit as recited in clause 1, wherein the TCU comprises a transformer adapted for transforming the input voltage to a higher voltage, and at least one frequency converter adapted for converting the frequency of the input voltage to a lower frequency.
3. An aircraft maintenance and/or servicing unit as recited in clause 2, wherein the transformer is adapted to transform the voltage from 200/115VAC to 400/230VAC, and the frequency converter is adapted to convert the frequency from 400 Hz to between 2 and 50 Hz.
4. An aircraft maintenance and/or servicing unit as recited in clause 1, further comprising a control unit and a control panel (CP) coupled to the control unit (CU) for enabling controlling operation of the maintenance unit by an operator.
5. An aircraft maintenance and/or servicing unit as recited in clause 2, wherein the frequency converter is designed to deliver a variable frequency.
6. An aircraft maintenance and/or servicing unit as recited in clause 1, wherein the equipment is selected from the group consisting of engine washing equipment, de-icing apparatus, cleaning devices, and service/maintenance tools.
7. An aircraft maintenance and/or servicing unit as recited in clause 1, wherein the equipment is a gas turbine engine washing equipment and comprises: a water delivery member for supplying water from a water source; a high pressure pump coupled to the water providing means for providing pressurized water; a high pressure water outlet connection for connecting cleaning devices.
8. An aircraft maintenance and/or servicing unit as recited in clause 7, further comprising water filters for cleaning the water form the water source.
9. An aircraft, maintenance and/or servicing unit as recited in clause 7, wherein means for providing water from a water source comprises inlet couplings for connecting an external water source to the unit.
10. An aircraft maintenance and/or servicing unit as recited in clause 7, wherein the unit comprises a water tank.
11. An aircraft maintenance and/or servicing unit as recited in clause 7, wherein the unit comprises a pump for pumping water through the filters.
12. An aircraft maintenance and/or servicing unit as recited in clause 7, wherein the filters comprise at least one of a de-ionization filter, a bag filter and a carbon filter.
13. An aircraft, comprising an auxiliary power unit (APU) delivering electric power at 200/115VAC/400 Hz, and a power output connection accessible from the outside of the aircraft.
14. An aircraft as recited in clause 13, wherein said power output connection is of a plug-and-socket type.
15. An aircraft as recited in clause 13, wherein said power output connection is protected by a removable cover plate.

## Claims

1. An aircraft maintenance and/or servicing unit, comprising:
electrically powered equipment (106);
a power input (120) adapted to be connected to an electrical power supply (101; 102) operating at 200/115VAC and 400 Hz;
a transformer and conversion unit (TCU) (108) adapted to transform the 200/115 VAC/400 Hz power to standard voltage of 400/230VAC/ at selected frequency and to deliver power to said equipment.

2. An aircraft maintenance and/or servicing unit as claimed in claim 1, wherein the equipment is a gas turbine engine washing equipment and comprises:
a water providing means (302) for supplying water from a water source;
a high pressure pump (312) coupled to the water providing means for providing pressurized water;
a high pressure water outlet (318) connection for connecting cleaning devices.

3. An aircraft maintenance and/or servicing unit as claimed in claim 2, further comprising water filters (BF1, BBF1, BBF2, BBF3, DI-Filter) for cleaning the water from the water source.

4. An aircraft maintenance and/or servicing unit as claimed in claim 3, wherein the unit comprises a pump (306) for pumping water through the filters.

5. An aircraft maintenance and/or servicing unit as claimed in claim 3 or 4, wherein the filters comprise at least one of a de-ionization filter (DI-Filter), a bag filter (BF1) and a carbon filter (BBF1, BBF2, BBF3).

6. An aircraft, maintenance and/or servicing unit as claimed in any one of claims 2 to 5, wherein the water providing means comprises inlet couplings (302) for connecting an external water source to the unit.

7. An aircraft maintenance and/or servicing unit as claimed in any one of claims 2 to 6, wherein the unit comprises a water tank (304).
